# EUROPEAN PATENT APPLICATION

(11) **EP 2 402 394 A1**
(43) Date of publication of application: **04.01.2012**
(21) Application number: 10745835.8
(22) Date of filing: 26.02.2010
(51) Int. Cl.: C08L 63/00, C09J 163/00

(54) **ROOM-TEMPERATURE CURABLE EPOXY STRUCTURAL ADHESIVE COMPOSITION AND PREPARATION METHOD THEREOF**

(30) Priority: 27.02.2009 CN 200910046817
(71) Applicant: Henkel (China) Investment Company Ltd., Shanghai 200090 (CN)
(72) Inventor: WU, Haiping, Shanghai 201203 (CN); ZHANG, Jingfen, Shanghai 200126 (CN); LI, Tony, Shanghai 200120 (CN)
(74) Representative: Strohe-Kamp, Geertje
(86) International application number: PCT/CN2010/070771
(87) International publication number: WO 2010/097051

(57) **Abstract**

A room-temperature curable epoxy structural adhesive composition comprises Component A and Component B, wherein Component A comprises a bisphenol A type epoxy resin, an impact resistance modified bisphenol A type epoxy resin, a silane coupling agent, a thixotropic agent and a coloring agent, wherein Component B comprises a polyamide, a polyether amine, a filler and a curing accelerator, wherein said impact resistance modified bisphenol A type epoxy resin is a liquid NBR modified bisphenol A type epoxy resin and/or a core-shell structural polymer toughened bisphenol A type epoxy resin. In addition, a preparation method of the said adhesive composition is provided.

## Description

### Field of the invention

The present invention relates to a room-temperature curable epoxy structural adhesive composition and preparation method thereof.

### Background of the invention

The room-temperature curable epoxy adhesives have been attracting widespread interests as they possess numerous advantages such as saving time, effort and energy cost, and usableness. Since the 1950s, with the discussion and application of toughening technology and core-shell microstructure theory, the application research of the epoxy resin adhesive in industry has made significant progress. The room-temperature curable epoxy adhesive has been widely used in the manufacture of aviation and aerospace aircrafts, cars, electrics and instruments, the decoration and maintenance of buildings, the packing of medical apparatus and medicaments, and the maintenance of daily living equipments, and it has been one of the important products that are widely used and have large application amount in the adhesive field.

The foreign countries that have developed two component room-temperature curable epoxy adhesives are mainly the United States, Switzerland, Germany, the United Kingdom and Japan, in which many articles and patents have been published and the products of various brands have been marketed. According to statistics of a U. S. commercial journal, 2/3 of the two component room-temperature curable adhesives brands produced by 120 major adhesive manufacturers in the U. S. are the epoxy room-temperature curable adhesives. It should be noted that most of these adhesives are those with an epoxy resin as body material, which are mainly used in bonding metals, plastics, glasses, ceramics, fibers, composite materials, woods and cements, as well as encapsulating or embedding of electrical components. In the aerospace field, the high performance room-temperature curable epoxy resin adhesives have been used for assembling composite materials of satellites and bonding of components such as solar panels. According to a statistic, in the aerospace field and the manufacture of helicopters, 17 room-temperature curable structural adhesives are used at positions such as airframe and engine, and several room-temperature curable adhesive are used for screw tightening as well as wire and thermocouple fixation. However, it also should be noted that the room-temperature curable structural adhesives have not been widely used in the aviation and aerospace field, especially in the manufacture of critical components of airplanes, as compared with the application of the room-temperature curable adhesives in civilian product repair and electronic industry. This is mainly due to that the overall performances of the room-temperature curable structural adhesives do not meet requirements of production and use of war products, especially rigorous requirements of strength, high-temperature tolerance and high durability. Adhesives with the curing temperature lower than the flight working temperature of airplanes are not applied for bonding these components, which indicates the future developing direction of the room-temperature curable structural adhesives. Research for the room-temperature curable structural adhesives in our country began in late 1950s and began to take shape in late 1990s, for example, Chinese patent Nos. CN1091129C, CN87100265A, CN1793267A, CN1239663C, CN1640979A, etc. Currently, the main gaps between our country and foreign advanced levels are: (1) the variety is small, e.g., there are few products with high peeling strength, high-temperature tolerance, and fast curing at room-temperature; (2) the poor performance, there are few high strength and high impact resistance epoxy structural adhesives with the shearing strength of up to 20MPa at room-temperature and the T-peeling strength of up to 5N/mm. The patent CN1793267A describes an epoxy high strength structural adhesive, in which the room-temperature curable epoxy structural adhesive has a shearing strength of less than 8MPa. The epoxy structural adhesive described in reference 1 (Guiqin Wu, Chemical Materials for Construction, 2006, 22(4): 23-24) has a shearing strength of less than 14MPa.

Therefore, there is an urgent need to develop an epoxy structural adhesive with simple preparation methods, facile raw materials and excellent performances.

### Disclosure of the invention

The technical problem to be solved by the present invention is to overcome the defects of poor impact resistance and high-temperature strength of the existing room-temperature curable epoxy structural adhesive compositions, and provide a room-temperature curable epoxy structural adhesive composition with good impact resistance and high-temperature strength and a preparation method of said epoxy structural adhesive.

The room-temperature curable epoxy structural adhesive composition of the present invention comprises component A and component B, wherein the component A comprises a bisphenol A type epoxy resin, an impact resistance modified bisphenol A type epoxy resin, a silane coupling agent, a thixotropic agent and a coloring agent, wherein the component B comprises a polyamide, a polyether amine, a filler and a curing accelerator, wherein said impact resistance modified bisphenol A type epoxy resin is a liquid nitrile-butadiene rubber (CTBN) modified bisphenol A type resin and/or a core-shell structural polymer toughened bisphenol A type epoxy resin.

In component A, the bisphenol A type epoxy resin and the bisphenol A type epoxy resin in impact resistance modified bisphenol A type epoxy resin are the conventionally used bisphenol A type epoxy resin in the art, preferably one or more of E51, E44, EPON828 and EPON 826 epoxy resins.

Said impact resistance modified bisphenol A type epoxy resin can effectively enhance the impact resistance of the room-temperature curable epoxy structural adhesive. Said liquid nitrile butadiene rubber (CTBN) modified bisphenol A type epoxy resin is commercially available, or obtainable according to the conventional methods in the art. In a preferred embodiment of the present invention, the CTBN modified bisphenol A type epoxy resin is prepared by mixing 100 parts by weight of liquid nitrile-butadiene rubber, 240-260 parts by weight of bisphenol A type epoxy resin, 2-3 parts by weight of fumed silicon dioxide and 2-3 parts by weight of phenyltrimethoxysilane at 20-30°C, heating to 60-70°C, reacting for 3-4 hours, and cooling, wherein said bisphenol A type epoxy resin is preferably EPON828 or EPON 826, the heating rate is preferably 2 to 5°C/min, and the cooling is to cool to 20 to 25°C.

Said core-shell structural (latex) polymer toughened bisphenol A type epoxy resin refers to the product obtained by mixing the polymer having the core-shell structure and the bisphenol A type epoxy resin. In the core-shell structural polymer of the present invention, the core is the conventional rubber elastomer in the art, and the shell is polystyrene. The toughening mechanism of the core-shell structural polymer toughened bisphenol A type epoxy resin utilizes mainly "void effect", and there is a layer of void between the core and the shell. When the external force reaches the core-shell particles via the resin, this layer of void can absorb the force, thereby protecting the colloid. See Hongbin Qiu, Lisong Dong, and Zhiliu Feng, Polymer Bulletin, 1997, 3: 179-183. The core-shell structural polymer toughened bisphenol A type epoxy resin is one that is conventionally used in the art and is commercially available or obtainable according to conventional methods in the art.

Said silane coupling agent is conventional silane coupling agent in the art, preferably one or more of KH550, KH560 and phenyltrimethoxysilane.

Said thixotropic agent is conventional thixotropic agent in the art, preferably fumed silicon dioxide. Said coloring agent is conventional coloring agent in the art, preferably ferric oxide.

In component B, the mixture of polyamide and polyether amine addresses the drawbacks of too long room-temperature curing time, large cure brittleness and low elongation rate of the general epoxy resin adhesives. Said polyamide is preferably polyamide with a number average molecular weight of 400 to 700, more preferably one or more of polyamide 650, polyamide 651, Versamid 115, Versamid 125 and Versamid 140. Said polyether amine is preferably polyether amine with a number average molecular weight of 200 to 400 and polyether amine with a number average molecular weight of 2000 to 5000, wherein the mass ratio of the polyether amine with a number average molecular weight of 200 to 400 to the polyether amine with a number average molecular weight of 2000 to 5000 is preferably 1:1 to 1:1.1. Said polyether amine with a number average molecular weight of 200 to 400 is preferably polyether amine T403 and/or polyether amine D230. Said polyether amine with a number average molecular weight of 2000 to 5000 is preferably polyether amine T5000 and/or polyether amine D2000.

Said filler is the conventional filler in the art, preferably fibrous micron-sized filler, and more preferably fibrous grammite and/or fibrous calcium sulfate. Said curing accelerator is the conventional curing accelerator in the art, preferably one or more of 2,4,6-tri(bimethylaminomethyl)phenol, dibutyltin dilaurate and dibutyltin diacetate.

Preferably, the mass ratio of the impact resistance modified bisphenol A type epoxy resin to the bisphenol A type epoxy resin in the component A is from 0.5 to 0.6, the mass ratio of the silane coupling agent to the bisphenol A type epoxy resin in the component A is from 0.04 to 0.05, the mass ratio of the thixotropic agent to the bisphenol A type epoxy resin in the component A is from 0.06 to 0.07, and the mass ratio of the coloring agent to the bisphenol A type epoxy resin in the component A is from 0.01 to 0.02; the mass ratio of the polyether amine to the polyamide in the component B is from 5 to 7, the mass ratio of the filler to the polyamide in the component B is from 3.57 to 4.62, and the mass ratio of the curing accelerator to the polyamide in the component B is from 0.21 to 0.31; and the volume ratio of component A to component B is from 1.5 to 2.5:1.

In a more preferred embodiment of the present invention, the mass ratio of the polyether amine with the number average molecular weight of 200 to 400 to the polyamide with the number average molecular weight of 400 to 700 in component B is from 2.5 to 3.5, the mass ratio of the polyether amine with the number average molecular weight of 2000 to 5000 to the polyamide with the number average molecular weight of 400 to 700 in component B is from 2.5 to 3.5, the mass ratio of the filler to the polyamide with the number average molecular weight of 400 to 700 in component B is from 3.57 to 4.62, and the mass ratio of the curing accelerator to the polyamide with the number average molecular weight of 400 to 700 in component B is from 0.21 to 0.31; and the component A has the same components and contents as described above.

The room-temperature curable epoxy structural adhesive of the present invention has an appearance of colloidal paste, is nontoxic and odourless, and does not contain any volatile solvent. It may be used at -90°C to 120°C. At room temperature, it has a viscosity between 100 and 500 mPa.s, a steel-steel surface shearing strength of up to 22MPa, and a steel-steel surface T peeling strength of up to 6.5N/mm. At 80°C, it has a steel-steel surface shearing strength of up to 17MPa. Its curing time at room temperature is 24h, its use time at room temperature after formulating adhesive is 1-2 h, and its volume contraction percentage after curing is less than 1%. Its storage period is over 1 year. It shows good bonding property for high-energy surfaces of metals, ceramics, glasses and polymers. By introducing the special epoxy impact resistance modifier, i.e. the impact resistance modified epoxy resin, the synthesized epoxy structural adhesive has a shearing strength of up to 22MPa and a T peeling strength of up to 6.5N/mm at room temperature, and a shearing strength of up to 17MPa at 80°C

The method of preparing the room-temperature curable epoxy structural adhesive composition of the present invention includes preparing component A and component B respectively, i.e. mixing the components of component A to prepare component A and mixing the components of component B to prepare component B. In one preferred embodiment of the present invention, the condition of said mixing is: dispersing by mechanical stirring at 300-500 rpm for 30min, mixing while evacuating for 2-3min at 200-300 rpm and mixing while evacuating for 30-60sec at 2000-3000 rpm at room temperature.

The room-temperature curable epoxy structural adhesive of the present invention has generally a gelling time of 2-3 hours and a complete curing time of 20-24 hours at room temperature.

The room temperature in the present invention refers to 20-30°C

The reagents and raw materials of the present invention all are commercially available.

The advantages of the present invention are:
(1) Said epoxy structural adhesive has high shearing strength and T peeling strength, ant it has good bonding property for high-energy surfaces of metals, ceramics, glasses and polymers.
(2) Novel epoxy resin toughener, CTBN modified bisphenol A type epoxy resin or the core-shell structural polymer modified bisphenol A type epoxy resin, are utilized, and the use of these tougheners addresses the drawbacks of large brittleness of the epoxy resin after curing, imparting high compact resistance on the epoxy resin adhesive.
(3) By utilizing mixing type curing system, mixture of polyamide and polyether amine at a certain ratio, the drawbacks of too long room-temperature curing time, large cure brittleness, low elongation rate and etc. of the general epoxy resin adhesives are addressed. The curing time is shortened while assuring that the strength of the adhesive shows no any drop.
(4) It is nontoxic, odourless, and does not contain any volatile solvent.
(5) The present invention has simple preparation methods, facile raw materials, and no harsh preparation conditions.

### Brief description of the drawings

Fig. 1 is the test results of the shearing strength at room temperature of the room-temperature curable epoxy structural adhesive prepared according to Example 1.
Fig. 2 is the test results of T peeling strength at room temperature of the room-temperature curable epoxy structural adhesive prepared according to Example 1.
Fig. 3 is the test results of the shearing strength at 80°C of the room-temperature curable epoxy structural adhesive prepared according to Example 1.

### Preferred embodiment of the invention

The present invention is further described with examples. But it is not limited to the examples.

The CTBN modified epoxy resin used in Example 1 is prepared as follows: 100g of liquid nitrile butadiene rubber (Hypro CTBN 1300×16, Emerald Co.) is added into 250g of EPON828 epoxy resin, and 2g of fumed silicon dioxide (TS-720, Kabot Co.) and 2g of phenyltrimethoxysilane are then added; these components are sufficiently mixed at room temperature, then heated to 60°C at a heating rate of 2°C min, reacted for 3 hours at 60°C, then cooled to the room temperature.

The core-shell structural polymer toughened epoxy resin is MX125 from KANEKA Co, Japan.

### Example 1:

Preparation of the room-temperature curable epoxy structural adhesive composition:
(a) 10g of bisphenol A type Epon828 epoxy resin, 5.5g of core-shell structural polymer modified epoxy resin, 0.45g of phenyltrimethoxysilane, 0.6g of fumed silicon dioxide and 0.1g of ferrous oxide are dispersed by mechanical stirring at 300 rpm at room temperature according to proportion by weight, and the mixture is then put into a high speed shearing mixer with vacuum apparatus, with mixing while evacuating for 3 min at 200 rpm, and then mixing while evacuating for 30 sec at 2000 rpm. Seal and keep the mixture to obtain component A.
(b) 1.35g of polyamide 650, 4g of polyether amine D230, 4g of polyether amine D2000, 5g of fibrous grammite and 0.3g of dibutyltin dilaurate are dispersed by mechanical stirring at 300 rpm at room temperature, and the mixture is then put into a high speed shearing mixer with vacuum apparatus, with mixing while evacuating for 3 min at 200 rpm, and then mixing while evacuating for 30 sec at 2000 rpm. Seal and keep the mixture to obtain component B.

In use, component A and component B are mixed uniformly at a volume ratio of 2:1 at room temperature to obtain the room-temperature curable epoxy structural adhesive product with high strength and high impact resistance. It has a gelling time of 3 hours and a complete curing time of 20 hours at room temperature. It can be used for structural bonding under various conditions and its overall performances possess the features and results as described in the present invention.

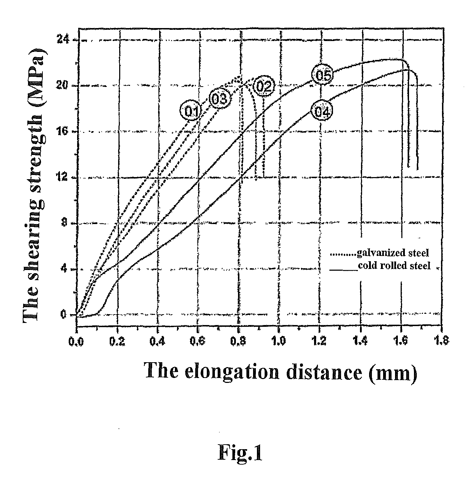

The test results of the shearing strength at room temperature of the room-temperature curable epoxy structural adhesive composition prepared according to Example 1 is shown in Table 1 and Fig. 1. As shown in Table 1 and Fig.1, the shearing strength at room temperature of the adhesive of the present invention is 20-22.3 MPa.

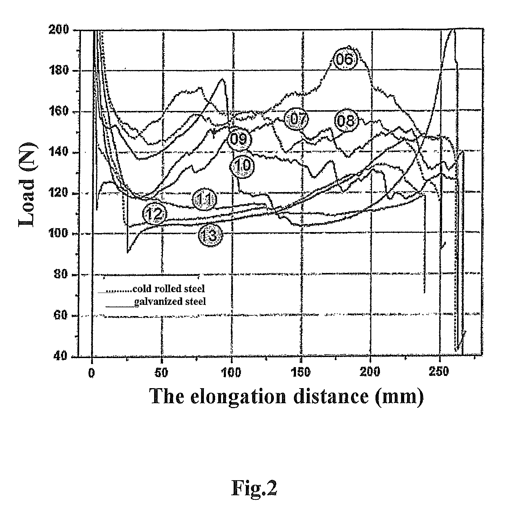

Table 2 and Fig. 2 provide the test results of T peeling strength at room temperature of the room-temperature curable epoxy structural adhesive prepared in Example 1. As shown in Table 2 and Fig. 2, the T peeling strength of the adhesive of the present invention is up to 6.32N/mm.

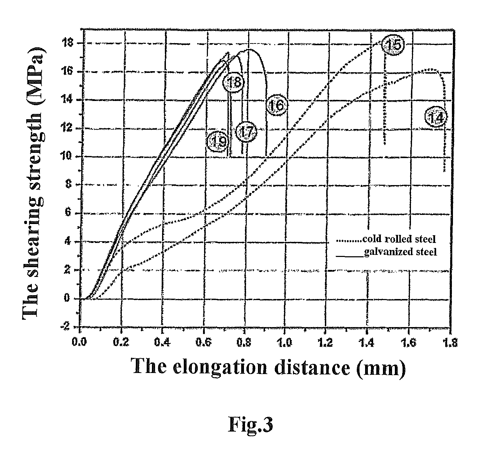

Table 3 and Fig. 3 provide the test results of the shearing strength at 80°C of the room-temperature curable epoxy structural adhesive prepared in Example 1. As shown in Table 3 and Fig. 3, the shearing strength at 80°C of the adhesive of the present invention is up to 16-18 MPa.

**Table 1**

| Experiment No. | Substrate | Maximal load (N) | Shearing strength (MPa) |
|---|---|---|---|
| 01 | galvanized steel | 6367.21 | 20.38 |
| 02 | galvanized steel | 6425.45 | 20.56 |
| 03 | galvanized steel | 6488.44 | 20.76 |
| 04 | cold rolled steel | 6664.53 | 21.33 |
| 05 | cold rolled steel | 6967.29 | 22.30 |

**Table 2**

| Experiment No. | Substrate | Peeling force (N) | Peeling strength (N/mm) |
|---|---|---|---|
| 06 | cold rolled steel | 157.73 | 6.31 |
| 07 | cold rolled steel | 156.10 | 6.24 |
| 08 | cold rolled steel | 158.05 | 6.32 |
| 09 | cold rolled steel | 150.78 | 6.03 |
| 10 | galvanized steel | 121.74 | 4.87 |
| 11 | galvanized steel | 122.26 | 4.89 |
| 12 | galvanized steel | 122.77 | 4.91 |
| 13 | galvanized steel | 120.23 | 4.81 |

**Table 3**

| Experiment No. | Substrate | Maximal load (N) | Shearing strength (MPa) |
|---|---|---|---|
| 14 | cold rolled steel | 5096.89 | 16.31 |
| 15 | cold rolled steel | 5700.03 | 18.24 |
| 16 | galvanized steel | 5509.31 | 17.63 |
| 17 | galvanized steel | 5362.54 | 17.16 |
| 18 | galvanized steel | 5271.89 | 16.87 |
| 19 | galvanized steel | 5462.53 | 17.48 |

### Examples 2-10

Prepare component A and component B respectively. The method of preparing component A and component B includes: according to the components and amounts listed in Table 4, dispersing by mechanical stirring at room temperature, then putting into a high speed shearing mixer with vacuum apparatus, with mixing while evacuating for 30 min at 500 rpm, and then mixing while evacuating for 60 sec at 3000 rpm. Seal and keep the mixture.

The CTBN modified epoxy resin used in Examples 2 and 4 is prepared as follows: 100g of liquid nitrile butadiene rubber (Hypro CTBN 1300×16, Emerald Co.) is added into 240g of EPON826 epoxy resin, and 3g of fumed silicon dioxide (TS-720, Kabot Co.) and 3g of phenyltrimethoxysilane are then added. These components are sufficiently mixed at room temperature, then heated to 70°C at a heating rate of 5°C /min and reacted for 4 hours at 70°C, then cooled to the room temperature.

The CTBN modified epoxy resin used in Examples 8 and 9 is prepared as follows: 100g of liquid nitrile butadiene rubber (Hypro CTBN 1300×16, Emerald Co.) is added into 260g of EPON826 epoxy resin, and 3g of fumed silicon dioxide (TS-720, Kabot Co.) and 3g of phenyltrimethoxysilane are then added. These components are sufficiently mixed at room temperature, then heated to 70°C at a heating rate of 5°C /min, reacted for 4 hours, then cooled to the room temperature.

**Table 4**

| Example No. Amount (g) | 2 | 3 | 4 | 5 | 6 | 7 | 8 | 9 | 10 |
|---|---|---|---|---|---|---|---|---|---|
| E44 epoxy resin | 10 | | | | | | 10 | | |
| E51 epoxy resin | | | 10 | | | 10 | | | |
| EPON828 epoxy resin | | 10 | | | 10 | | | 10 | 10 |
| EPON826 epoxy resin | | | | 10 | | | | | |
| CTBN modified epoxy resin | 5.2 | | 6 | | | | 5.6 | | 6 |
| Core-shell structural polymer modified epoxy | | 5.9 | | 5 | 6 | 5.5 | | 5.5 | |
| KH550 | 0.41 | | | | | | | | 0.5 |
| KH560 | | | 0.5 | | 0.48 | | | 0.5 | |
| phenyltrimethoxysilane | | 0.5 | | 0.42 | | 0.43 | 0.48 | | |
| Fumed silicon dioxide | 0.6 | 0.7 | 0.7 | 0.66 | 0.7 | 0.65 | 0.67 | 0.7 | 0.68 |
| Ferrous oxide | 0.12 | 0.18 | 0.15 | 0.2 | 0.2 | 0.11 | 0.13 | 0.12 | 0.15 |
| polyamide 650 | 1.3 | 1.4 | | | | | | | 1.4 |
| polyamide 651 | | | 1.4 | | | | | | |
| Versamid115 | | | | | 1.38 | | | | |
| Versamid 125 | | | | 1.35 | | | | 1.33 | |
| Versamid 140 | | | | | | 1.36 | 1.38 | | |
| D230 | 3.5 | | 4.5 | 3.6 | | | | 3.9 | 4.2 |
| D2000 | 3.5 | | | | 3.5 | | 4.5 | 3.9 | |
| T403 | | 3.4 | | | 3.5 | 4.0 | 4.5 | | |
| T5000 | | 3.4 | 4.5 | 3.6 | | 4.0 | | | 4.2 |
| grammite powder | 5 | | 6 | 5 | 5.5 | | | | |
| calcium sulfate | | 5 | | | | 6 | 6 | 6 | 6 |
| DMP-30 | | 0.36 | | | | 0.35 | | | 0.4 |
| dibutyltin dilaurate | 0.32 | | | 0.33 | 0.38 | | 0.35 | | |
| dibutyltin diacetate | | | 0.4 | | | | | 0.34 | |

## Claims

1. A room-temperature curable epoxy structural adhesive composition comprising component A and component B, wherein the component A comprises a bisphenol A type epoxy resin, an impact resistance modified bisphenol A type epoxy resin, a silane coupling agent, a thixotropic agent and a coloring agent, wherein the component B comprises a polyamide, a polyether amine, a filler and a curing accelerator, wherein said impact resistance modified bisphenol A type epoxy resin is a liquid nitrile-butadiene rubber modified bisphenol A type resin and/or a core-shell structural polymer toughened bisphenol A type epoxy resin.

2. The room-temperature curable epoxy structural adhesive composition of claim 1, **characterized in that** the mass ratio of the impact resistance modified bisphenol A type epoxy resin to the bisphenol A type epoxy resin in the component A is from 0.5 to 0.6, the mass ratio of the silane coupling agent to the bisphenol A type epoxy resin in the component A is from 0.04 to 0.05, the mass ratio of the thixotropic agent to the bisphenol A type epoxy resin in the component A is from 0.06 to 0.07, and the mass ratio of the coloring agent to the bisphenol A type epoxy resin in the component A is from 0.01 to 0.02; the mass ratio of the polyether amine to the polyamide in the component B is from 5 to 7, the mass ratio of the filler to the polyamide in the component B is from 3.57 to 4.62, and the mass ratio of the curing accelerator to the polyamide in the component B is from 0.21 to 0.31; and the volume ratio of component A to component B is from 1.5 to 2.5:1.

3. The room-temperature curable epoxy structural adhesive composition of any one of claims 1 or 2, **characterized in that**, in the component B, said polyamide is a polyamide with a number average molecular weight of 400 to 700, and said polyether amine is a polyether amine with a number average molecular weight of 200 to 400 and a polyether amine with a number average molecular weight of 2000 to 5000.

4. The room-temperature curable epoxy structural adhesive composition of claim 3, **characterized in that** said polyamide with a number average molecular weight of 400 to 700 is one or more of polyamide 650, polyamide 651, Versamid 115, Versamid 125 and Versamid 140; said polyether amine with a number average molecular weight of 200 to 400 is polyether amine T403 and/or polyether amine D230; and said polyether amine with a number average molecular weight of 2000 to 5000 is polyether amine T5000 and/or polyether amine D2000.

5. The room-temperature curable epoxy structural adhesive composition of claim 3, **characterized in that** the mass ratio of the polyether amine with a number average molecular weight of 200 to 400 to the polyether amine with a number average molecular weight of 2000 to 5000 in the component B is from 1:1 to 1:1.1.

6. The room-temperature curable epoxy structural adhesive composition of claim 1, **characterized in that** said liquid nitrile-butadiene rubber modified bisphenol A type epoxy resin in the component A is prepared by mixing 100 parts by weight of liquid nitrile-butadiene rubber, 240-260 parts by weight of bisphenol A type epoxy resin, 2-3 parts by weight of fumed silicon dioxide and 2-3 parts by weight of phenyltrimethoxysilane at 20-30°C, heating to 60-70°C, reacting for 3-4 hours, and cooling.

7. The room-temperature curable epoxy structural adhesive composition of claim 6, **characterized in that** said bisphenol A type epoxy resin is EPON828 or EPON826; said heating rate is 2 to 5°C/min; and said cooling is to cool to 20 to 25°C.

8. The room-temperature curable epoxy structural adhesive composition of claim 1, **characterized in that** the core in said core-shell structural polymer in the component A is rubber elastomer, and the shell in said core-shell structural polymer in the component A is polystyrene.

9. The room-temperature curable epoxy structural adhesive composition of claim 1, **characterized in that**, in the component A, said bisphenol A type epoxy resin and said bisphenol A type epoxy resin in impact resistance modified bisphenol A type epoxy resin is one or more of E51, E44, EPON828 and EPON826 epoxy resins.

10. The room-temperature curable epoxy structural adhesive composition of claim 1, **characterized in that**, in the component A, said silane coupling agent is one or more of KH550, KH560 and phenyltrimethoxysilane, said thixotropic agent is fumed silicon dioxide, and said coloring agent is ferric oxide.

11. The room-temperature curable epoxy structural adhesive composition of claim 1, **characterized in that** said filler in the component B is fibrous micron-sized filler.

12. The room-temperature curable epoxy structural adhesive composition of claim 11, **characterized in that** said filler is fibrous grammite and/or fibrous calcium sulfate.

13. The room-temperature curable epoxy structural adhesive composition of claim 1, **characterized in that** said curing accelerator in the component B is one or more of 2,4,6-tri(bimethylaminomethyl)phenol, dibutyltin dilaurate and dibutyltin diacetate.

14. A method of preparing the room-temperature curable epoxy structural adhesive composition of any one of claims 1-13, wherein the component A and the component B are obtained by mixing the components of the component A and the components of the component B respectively; wherein the mixing is done as follows: at 20-30°C, dispersing by mechanical stirring at a speed of 300-500 rpm for 30 min, mixing while vacuating at a speed of 200-300 rpm for 2-3 min, and mixing while vacuating at a speed of 2000-3000 rpm for 30-60 sec.
